# EUROPEAN PATENT SPECIFICATION

(11) **EP 2 821 615 B1**
(45) Date of publication and mention of the grant of the patent: **18.05.2016**
(21) Application number: 13175332.9
(22) Date of filing: 05.07.2013
(51) Int. Cl.: F02B 37/18, F01D 17/10, F16K 1/18

(54) **Wastegate device for an exhaust gas turbocharger**
Abblasventilvorrichtung für einen Abgasturbolader
Dispositif de soupape de décharge pour un turbocompresseur à gaz d'échappement

(43) Date of publication of application: 07.01.2015
(73) Proprietor: Bosch Mahle Turbo Systems GmbH & Co. KG, 70376 Stuttgart (DE)
(72) Inventor: Thangavelu, Kanagaraj, 641047 Tamil Nadu (IN)
(74) Representative: BRP Renaud & Partner mbB Rechtsanwälte Patentanwälte Steuerberater

(56) References cited:
- EP-A2- 2 336 519
- DE-A1- 19 928 745
- DE-A1-102010 001 210
- US-A1- 2010 300 415

## Description

The present invention relates to a wastegate device for an exhaust gas turbocharger and to an exhaust gas turbocharger having such a wastegate device. The invention finally relates to a motor vehicle having such an exhaust gas turbocharger.

Conventional exhaust gas turbochargers with wastegate channel and wastegate opening provided in the latter comprise a wastegate valve, which comprises a spindle which is rotatably mounted on a turbine housing of the exhaust gas turbocharger and a wastegate flap which is mounted on the spindle in a rotationally fixed manner for opening or closing the wastegate opening. Because of the components, such conventional wastegate flaps have to be able to offset an angle error in the flap mechanism, which can develop due to wear or has to be provided during the manufacture of the wastegate valve mechanism in the form of so-called angular clearances. Such angular clearances however can lead to said wear in the components of the wastegate flap mechanism in conventional wastegate flap mechanisms. Without a technically complex compensation mechanism, such mechanical vibrations of the turbine housing can also lead to undesirable acoustic noises, such as for example in the form of a "rattling" in the exhaust gas turbocharger.

Document DE 10 2010 001 210 A describes a wastegate device where a spring device is used to support movement in one direction.

It is an object of the present invention to show new ways in the development of wastegate devices for an exhaust gas turbocharger.

This object is solved through the subject of the independent patent claims. Preferred embodiments are subject of the subclaims.

The invention is based on the general idea of providing a lever mechanism for actuating a wastegate flap attached to the wastegate spindle, which establishes a drive connection between an actuator and the spindle. According to the invention, this lever mechanism comprises at least two lever arms which are interconnected in an articulated manner by means of a first joint arrangement. On the first joint arrangement, a spring element is provided here, which preloads the wastegate flap against the closed position, in which it closes the wastegate opening. The preload force generated by the spring element and acting on the first lever arm allows it to omit a tracking of the closed position of the wastegate valve during the activation of the actuator for adjusting the wastegate flap when the closed position of the wastegate flap - in which the latter closes the wastegate opening in a fluid-tight manner - changes because of wear on the wastegate opening or the wastegate valve seat enclosing the wastegate opening. Thus, in contrast with conventional wastegate devices, it is no longer necessary through suitable activation of the actuator to adjust the closed position of the wastegate spindle or wastegate flap because of material wear on the valve seat of the wastegate valve from time to time. For by means of the spring element, which is provided on the lever mechanism between actuator and spindle, an additional pressure force is now exerted on the wastegate flap so that the latter is also pressed against the wastegate flap when the wastegate flap in the closing position of the actuator no longer bears against the housing with the desired pressure force generated by the actuator. Even in the event that the actuator, which can for example be an electric motor, should fail due to a fault, so that from said electric motor no holding force for fixing the wastegate spindle or wastegate valve in the closed position can be provided, it can be achieved by means of the spring element that the wastegate flap closes the wastegate opening in a fluid-tight manner even against the fluid pressure of the exhaust gas flowing through the wastegate opening. The wastegate device according to the invention with the spring element introduced above thus realises a failsafe function for the flap mechanism, which in the case of a malfunctioning of the actuator ensures that the wastegate flap is moved into the closed position, in which it closes the wastegate opening.

In a preferred embodiment, the lever mechanism can comprise a first, second and third lever arm. Here, the first lever arm on the one end is connected to the spindle in a rotationally fixed manner and on the other end connected in an articulated manner to the second lever arm by means of the first joint arrangement. Accordingly, the second lever arm on the one end is connected in an articulated manner to the first lever arm by means of the first joint arrangement and on the other end is connected in an articulated manner to the third lever arm by means of its second joint arrangement. The third lever arm, finally, on the one end is connected in a rotationally fixed manner to the actuator device and on the other end connected in an articulated manner to the second lever arm with the second joint arrangement. Such a joined kinematic favours a drive coupling of the actuator device with the spindle which under practical production aspects is simple to produce yet reliable. In a simplified version, according to which the lever mechanism comprises only two lever arms, the third lever arm can be omitted. In this case, the actuator is not provided with a driveshaft but realised in the form of a linear actuator.

According to the invention, the first joint arrangement comprises a first and second through-opening each provided in the first and second lever arm, in which a connecting element each at the axial end side for coupling the two lever arms is inserted. In this way, the movement kinematic of the lever mechanism according to the invention is technically easily realised.

Particularly practically, the connecting element can be rotatably mounted on the first and/or second lever arm, which makes possible an articulated interconnection of the two lever arms that is easily realised with respect to production.

According to the invention, the spring element is designed as a torsion spring, which connects the first lever arm to the second lever arm and surrounds the connecting element with at least one winding in a screw-like manner. In the event that the connecting elements formed in the manner of a pin, the torsion spring can be simply pushed onto the connecting pin so that it envelopes the latter screw-like on its circumferential surface.

Particularly preferably, the torsion spring for generating a preload force can be mounted on one end of a first mounting opening provided on the first lever arm and on the other end in a mounting opening provided on the second lever arm. This means that the torsion spring on the one end supports itself on the first and second lever arm each and in this way generates the preload force required for preloading the wastegate spindle or the wastegate flap against the closed position.

As already mentioned before, the connecting element according to a particularly preferred embodiment is designed pin-like, as a result of which the previously introduced rotatable mounting of the connecting element on the first and/or second lever arm can be realised in a simple manner.

Furthermore, the actuator device can comprise an electric motor with a driveshaft, which is connected to the third lever arm in a rotationally fixed manner. This makes possible a particularly simple realisation of drive-coupling the actuator device to the lever mechanism.

The invention furthermore relates to an exhaust gas turbocharger with a wastegate device having one or a plurality of the features explained above. The invention finally relates to a motor vehicle with an internal combustion engine with an exhaust gas turbocharger previously introduced and interacting with the combustion engine.

Further important features and advantages of the invention are obtained from the subclaims, from the drawing and from the associated Figure description by means of the drawing.

It is to be understood that the features mentioned above and still to be explained in the following cannot only be used in the respective combination stated but also in other combinations or by themselves, without leaving the scope of the present invention.

Preferred exemplary embodiments of the invention are shown in the drawing and are explained in more detail in the following description.

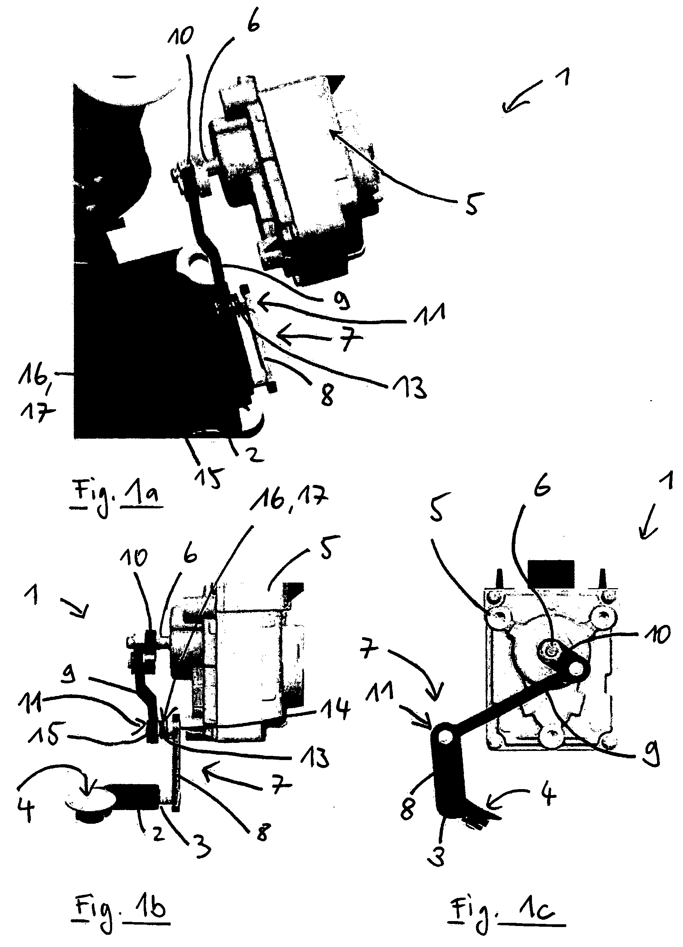

Figure 1 shows a wastegate device according to the invention. The wastegate device 1 in Figure 1 a is shown in a perspective view, Figure 1b shows a front view and Figure 1c a lateral view of the wastegate device 1.

The wastegate device 1 comprises a housing 2, which is only shown as a detail in the Figures 1 a and 1 b. In the Figure 1c, the housing is not shown for the sake of clarity.

As is evident from the representation of Figure 1b, a spindle 3 is rotatably mounted on the housing 2 of the wastegate device. On the spindle 3, a wastegate flap 4 which again is merely shown in the Figures 1b and 1c is fastened, which optionally closes or opens a wastegate opening (not shown) which is provided on the housing 2. To this end, the spindle 3 which is rotatably mounted on the housing 2 and the wastegate flap 4 which is fastened to the spindle 3 in a rotationally fixed manner can be rotationally adjusted between an opened position, in which the wastegate flap 4 opens the wastegate opening for the through-flow of exhaust gas and a closed position, in which it closes the wastegate opening.

For adjusting the spindle 3, the wastegate device 1 comprises an actuator device 5, which for example can be configured as a conventional electric motor with a driveshaft 6. The actuator device 5 can likewise be fastened on the housing 2, which in the Figures 1a to 1c is not shown for the sake of clarity.

For drive-connecting the actuator device 5, the wastegate device 1 comprises a lever mechanism 7 on the first lever arm 8, a second lever arm 9 and a third lever arm 10. In a simplified version, the third lever arm 10 can be omitted so that the lever mechanism 7 according to this version only has two lever arms. For realising such a simplified lever kinematic, the actuator 5 in this case is designed as a linear actuator, which generates a linear movement of the second lever arm 9.

From the Figures 1 a to 1 c it is evident that the first lever arm 8 on the one end is connected to the spindle 3 in a rotationally fixed manner and on the other end is connected in an articulated manner to the second lever arm 9 by means of a first joint arrangement 11. The second lever arm 9 is connected in an articulated manner to the third lever arm 10 in the region of an end portion facing away from the first lever arm 8 by means of a second joint arrangement 12. This third lever arm 10 is again fastened in a rotationally fixed manner to the driveshaft 6 of the actuator device 5 by means of an end portion facing away from the second lever arm 9. Such a rotationally fixed fastening can for example be realised by means of a screw connection. The first joint arrangement 11 comprises a connecting element 13 for the articulated connecting of the first lever arm 8 to the second lever arm 9, which is designed as a connecting pin and can be rotatably mounted on the first and/or second lever arm 8, 9. For the purpose of such a rotatable mounting, the connecting element 13 can be inserted on each axial end side in a respective first and second through-opening 14, 15 provided both in the first as well as in the second lever arm 8, 9.

The first joint arrangement now additionally comprises a spring element 16, by means of which the wastegate flap 4 is preloaded against the closed position. To this end, the spring element 16 can be designed as a torsion spring 17, which connects the first lever arm 8 to the second lever arm 9 and surrounds the connecting element 13 formed as a connecting pin screw-like with a plurality of windings. For generating a preload force on the wastegate flap 4, the torsion spring 17 is mounted on the one end in a first mounting opening provided on the first lever arm 8 and on the other end in a second mounting opening provided on the second lever arm, so that the torsion spring can generate the desired preload force for preloading the wastegate spindle 3 or the wastegate flap 4 fastened thereon in a rotationally fixed manner against the closed position. The preload force generated by the torsion spring 17 and acting on the first lever arm 8 allows during the activation of the actuator 3 for adjusting the wastegate flap 4, to omit a tracking of the closed position of the wastegate valve 4 when said position, in which the wastegate opening is closed by the wastegate flap 4 in a fluid-tight manner, should change due to wear on the wastegate opening, in particular on the wastegate valve seat enclosing the wastegate opening.

In the event that the actuator 5 because of a technical defect does not allow a targeted positioning of the wastegate flap and also cannot generate an adequate holding force acting on the wastegate flap 4 in its closed position, the preload force generated by the torsion spring 17 realises a failsafe function such that the wastegate flap 4 is automatically moved into the closed position. An undesirable exhaust gas leakage flow of exhaust gas through the wastegate opening can thus be prevented especially in the case of a technical defect of the actuator.

## Claims

1. A wastegate device (1) for an exhaust gas turbocharger,
- with a housing (2), in which a wastegate opening for the flowing-through of an exhaust gas is provided,
- with a spindle (3) which is rotatably mounted on the housing (2), on which a wastegate flap (4) is arranged, which by turning the spindle (3) can be adjusted between an opened position, in which it opens the wastegate opening for the through-flow of exhaust gas and a closed position, in which it closes the wastegate opening,
- with an actuator device (5) which is drive-connected to the spindle (3) for adjusting the wastegate flap (4) by means of a lever mechanism (7),
- wherein the lever mechanism (7) comprises at least one first and one second lever arm (8, 9), which are interconnected in an articulated manner by means of a first joint arrangement (11),
- wherein on the first joint arrangement (11) a spring element (16) is provided, which preloads the wastegate flap (4) against the closed position via the lever mechanism (7),
- wherein the first joint arrangement (11) comprises a first and second through-opening each provided in the first and second lever arm (8, 9), into which a connecting element (13) on each axial end side is inserted for coupling the two lever arms (8, 9),
**characterized in that**
the spring element (16) is designed as a torsion spring (17), which connects the first lever arm (8) to the second lever arm (9) and surrounds the connecting element (13) with at least one winding.

2. The wastegate device according to Claim 1,
**characterized in that**
- the lever mechanism (7) comprises a first, second and third lever arm (8, 9, 10),
- the first lever arm (8) on one end is connected in a rotationally fixed manner to the spindle (3) and on the other end is connected in an articulated manner to the second lever arm (9) by means of the first joint arrangement (11),
- the second lever arm (9) of a second joint arrangement (12) is connected to the third lever arm (10) in an articulated manner,
- the third lever arm (10) on the one end is connected in a rotationally fixed manner to the actuator device (5) and on the other end is connected to the second lever arm (9) in an articulated manner by means of the second joint arrangement (12).

3. The wastegate device according to Claim 1,
**characterized in that**
the connecting element (13) is rotatably mounted on the first and/or second lever arm (8, 9).

4. The wastegate device according to any of the preceding Claims,
**characterized in that**
the torsion spring (17) for generating a preload force on the one end is mounted in a first mounting opening provided on the first lever arm (8) and on the other end is mounted in a second mounting opening provided on the second lever arm (9).

5. The wastegate device according to any one of the preceding Claims,
**characterized in that**
the connecting element (13) is designed pin-like.

6. The wastegate device according to any one of the preceding Claims,
**characterized in that**
the actuator device (5) comprises an electric motor with a driveshaft (6), which is connected to the third lever arm (10) in a rotationally fixed manner.

7. An exhaust gas turbocharger with a wastegate device (1) according to any one of the Claims 1 to 6.

8. A motor vehicle,
- with an internal combustion engine,
- with an exhaust gas turbocharger interacting with the internal combustion engine according to Claim 7.

## Patentansprüche

1. Wastegate-Vorrichtung (1) für einen Abgasturbolader,
- mit einem Gehäuse (2), in dem eine Wastegate-Öffnung für den Durchstrom eines Abgases vorgesehen ist,
- mit einer Spindel (3), die drehbar am Gehäuse (2) angebracht ist, an der eine Wastegate-Klappe (4) angeordnet ist, die durch Drehen der Spindel (3) zwischen einer geöffneten Position, in der sie die Wastegate-Öffnung für den Durchstrom von Abgas öffnet, und einer geschlossenen Position, in der sie die Wastegate-Öffnung schließt, einstellbar ist,
- mit einer Stellgliedvorrichtung (5), die mit der Spindel (3) zum Einstellen des Wastegate-Klappe (4) mithilfe eines Hebelmechanismus (7) antriebsverbunden ist,
- wobei der Hebelmechanismus (7) zumindest einen ersten und einen zweiten Hebelarm (8, 9) umfasst, die mithilfe einer ersten Gelenkanordnung (11) gelenkig miteinander verbunden sind,
- wobei an der ersten Gelenkanordnung (11) ein Federelement (16) vorgesehen ist, das die Wastegate-Klappe (4) über den Hebelmechanismus (7) gegen die geschlossene Position vorspannt,
- wobei die erste Gelenkanordnung (11) eine erste und zweite Durchgangsöffnung umfasst, die jede im ersten und zweiten Hebelarm (8, 9) vorgesehen sind und in die ein Verbindungselement (13) an jeder axialen Endseite zum Verkuppeln der zwei Hebelarme (8, 9) eingeführt ist,
**dadurch gekennzeichnet, dass**
das Federelement (16) als Torsionsfeder (17) gestaltet ist, die den ersten Hebelarm (8) mit dem zweiten Hebelarm (9) verbindet und das Verbindungselement (13) mit zumindest einer Wicklung umgibt.

2. Wastegate-Vorrichtung nach Anspruch 1,
**dadurch gekennzeichnet, dass**
- der Hebelmechanismus (7) eine ersten, zweiten und dritten Hebelarm (8, 9, 10) umfasst,
- der erste Hebelarm (8) an einem Ende drehfest mit der Spindel (3) verbunden ist und am anderen Ende mithilfe der ersten Gelenkanordnung (11) gelenkig mit dem zweiten Hebelarm (9) verbunden ist,
- der zweite Hebelarm (9) einer zweiten Gelenkanordnung (12) gelenkig mit dem dritten Hebelarm (10) verbunden ist,
- der dritte Hebelarm (10) am einen Ende drehfest mit der Stellgliedvorrichtung (5) verbunden ist und am anderen Ende mithilfe der zweiten Gelenkanordnung (12) gelenkig mit dem zweiten Hebelarm (9) verbunden ist.

3. Wastegate-Vorrichtung nach Anspruch 1,
**dadurch gekennzeichnet, dass**
das Verbindungselement (13) drehbar am ersten und/oder zweiten Hebelarm (8, 9) angebracht ist.

4. Wastegate-Vorrichtung nach einem der vorhergehenden Ansprüche,
**dadurch gekennzeichnet, dass**
die Torsionsfeder (17) zum Erzeugen einer Vorspannkraft am einen Ende in einer ersten Anbringungsöffnung, die am ersten Hebelarm (8) vorgesehen ist, angebracht ist und am anderen Ende in einer zweiten Anbringungsöffnung, die am zweiten Hebelarm (9) vorgesehen ist, angebracht ist.

5. Wastegate-Vorrichtung nach einem der vorhergehenden Ansprüche,
**dadurch gekennzeichnet, dass**
das Verbindungselement (13) stiftartig gestaltet ist.

6. Wastegate-Vorrichtung nach einem der vorhergehenden Ansprüche,
**dadurch gekennzeichnet, dass**
die Stellgliedvorrichtung (5) einen Elektromotor mit Antriebswelle (6) umfasst, die drehfest mit dem dritten Hebelarm(10) verbunden ist.

7. Abgasturbolader mit einer Wastegate-Vorrichtung (1) gemäß einem der Ansprüche 1 bis 6.

8. Kraftfahrzeug,
- mit einem Verbrennungsmotor,
- mit einem Abgasturbolader, der mit dem Verbrennungsmotor in Wechselwirkung steht, gemäß Anspruch 7.

## Revendications

1. Dispositif à soupape de décharge (1) pour un turbocompresseur à gaz d'échappement, comprenant :
- un boîtier (2) dans lequel est ménagée une ouverture de soupape de décharge pour l'évacuation d'un gaz d'échappement,
- une broche (3) qui est montée à rotation sur le boîtier (2), sur lequel est agencé un volet (4) de soupape de décharge qui, par rotation de la broche (3), peut être ajusté entre une position ouverte, dans laquelle il ouvre l'ouverture de la soupape de décharge pour l'évacuation du gaz d'échappement, et une position fermée, dans laquelle il ferme l'ouverture de la soupape de décharge,
- un dispositif d'actionnement (5) qui est raccordé à la broche (3) en entraînement pour ajuster le volet (4) de la soupape de décharge au moyen d'un mécanisme à levier (7),
- dans lequel le mécanisme à levier (7) comprend au moins un premier et un deuxième bras de levier (8, 9) qui sont interconnectés en mode articulé au moyen d'un premier aménagement de jonction (11),
- dans lequel il est prévu sur le premier aménagement de jonction (11) un élément à ressort (16) qui pré-charge le volet (4) de la soupape de décharge contre la position fermée via le mécanisme à levier (7),
- dans lequel le premier aménagement de jonction (11) comprend une première et une seconde ouverture traversante qui sont prévues chacune dans les premier et deuxième bras de levier (8, 9), dans lesquelles ouvertures un élément de raccordement (13) sur chaque côté d'extrémité axiale est inséré pour coupler les deux bras de levier (8, 9),
**caractérisé en ce que** :
l'élément à ressort (16) est conçu en ressort de torsion (17) qui raccorde le premier bras de levier (8) au deuxième bras de levier (9) et entoure l'élément de raccordement (13) par au moins une spire.

2. Dispositif à soupape de décharge selon la revendication 1,
**caractérisé en ce que** :
- le mécanisme à levier (7) comprend un premier, un deuxième et un troisième bras de levier (8, 9, 10),
- le premier bras de levier (8) à une extrémité est raccordé en mode fixé à rotation à la broche (3) et à l'autre extrémité est raccordé en mode articulé au deuxième bras de levier (9) au moyen d'un premier aménagement de jonction (11),
- le deuxième bras de levier (9) d'un second aménagement de jonction (12) est raccordé au troisième bras de levier (10) en mode articulé,
- le troisième bras de levier (10) à la première extrémité est raccordé en mode fixé à rotation au dispositif d'actionnement (5) et à l'autre extrémité est raccordé au deuxième bras de levier (9) en mode articulé au moyen du second aménagement de jonction (12).

3. Dispositif à soupape de décharge selon la revendication 1,
**caractérisé en ce que** :
l'élément de raccordement (13) est monté à rotation sur le premier et/ou le deuxième bras de levier (8, 9).

4. Dispositif à soupape de décharge selon l'une quelconque des revendications précédentes,
**caractérisé en ce que** :
le ressort de torsion (17) pour générer une force de pré-chargement à la première extrémité est monté dans une première ouverture de montage ménagée sur le premier bras de levier (8) et sur l'autre extrémité est monté dans une seconde ouverture de montage ménagée sur le deuxième bras de levier (9).

5. Dispositif à soupape de décharge selon l'une quelconque des revendications précédentes,
**caractérisé en ce que** :
l'élément de raccordement (13) est conçu en forme de goupille.

6. Dispositif à soupape de décharge selon l'une quelconque des revendications précédentes,
**caractérisé en ce que** :
le dispositif d'actionnement (5) comprend un moteur électrique avec un arbre d'entraînement (6) qui est connecté au troisième bras de levier (10) en mode fixé à rotation.

7. Turbocompresseur à gaz d'échappement pourvu d'un dispositif à soupape de décharge (1) selon l'une quelconque des revendications 1 à 6.

8. Véhicule à moteur comprenant:
- un moteur à combustion interne,
- un turbocompresseur à gaz d'échappement interagissant avec le moteur à combustion interne selon la revendication 7.
